# EUROPEAN PATENT SPECIFICATION

(11) **EP 4 107 444 B1**
(45) Date of publication and mention of the grant of the patent: **15.07.2026**
(21) Application number: 21707407.9
(22) Date of filing: 19.02.2021
(51) Int. Cl.: F24S 20/70, H02S 20/00, B63B 35/38, F24S 25/65

(54) **KIT OF PARTS FOR ASSEMBLING A FLOATING SOLAR PANEL ASSEMBLY**
BAUSATZ FÜR MONTAGE EINER SCHWIMMENDEN SONNENKOLLEKTORANORDNUNG
KIT DE PIÈCES POUR L'ASSEMBLAGE D'UN ENSEMBLE PANNEAU SOLAIRE FLOTTANT

(30) Priority: 21.02.2020 NL 2024967
(43) Date of publication of application: 28.12.2022
(73) Proprietor: Profloating B.V., 2676 LV Maasdijk (NL)
(72) Inventor: VAN DAALEN, Vincent Daniel Gijsberthus, 2694 BK 's-GRAVENZANDE (NL)
(74) Representative: Arnold & Siedsma
(86) International application number: PCT/NL2021/050119
(87) International publication number: WO 2021/167465

(56) References cited:
- WO-A1-2013/006882
- WO-A1-2016/185267
- WO-A1-2019/053389
- FR-A1- 2 960 207
- IT-A1- BO20 120 158
- IT-A1- SA20 110 024
- NL-A- 7 210 576
- US-A- 6 145 463
- US-A1- 2004 134 405

## Description

The present invention relates to a kit of parts for assembling a floating solar panel assembly, a floating solar panel assembly and a method for manufacturing a floating solar panel assembly.

Generating electricity by using photovoltaic solar panels is becoming increasingly popular. It is however a problem that the space for placement of such solar panels, for instance on flat roof tops, is limited. In order to be able to also use the space on water bodies such as lakes, rivers, "artificial water reservoirs", such as a basin or a storage reservoir, or even open water, it is known to provide floating solar panel assemblies. A typical assembly comprises a plurality of interconnected floating members and these floating members are then arranged to support a plurality of solar panels, for example in Italian patent IT BO20 120 158 A1 (D1) and French patent FR 2 960 207 A1 (D2). These floating members typically comprises a buoyant member and at least two connection points for connecting the floating member to respective connection points of at least two other floating members. D1 discloses an apparatus and a process for generating electricity through photovoltaic panels, in particular an apparatus configured to be arranged in a basin of water. D2 discloses a structure that has modular parallelepiped floating blocks whose vertical edges are provided with lugs in which connection elements are inserted to assure assembling of the blocks. Multiple anchoring points are situated below and inside the structure. Each anchoring point is formed of an anchoring key comprising a rod engaged in the lugs of multiple adjacent blocks to assemble the blocks. The rod includes attachment units e.g. bore and stop bar to attach a synthetic textile film extending below the structure from a lower end of the rod.

It is however a drawback of these known assemblies that they are difficult and/or less efficient to anchor. It is therefore a goal of the present invention, next to other goals, to provide an improved and/or more efficient anchoring device for anchoring a floating solar panel assembly.

This goal, amongst other goals, is met by a kit of parts according to appended claim 1. More specifically, this goal, amongst other goals, is met by a kit of parts comprising an anchoring device for anchoring the floating solar panel assembly, wherein the assembly comprises a plurality of interconnected floating members for supporting at least one solar panel, wherein a floating member comprises a buoyant member and at least two connection points for connecting the floating member to respective connection points of at least two other floating members, wherein the anchoring device comprises a frame member interconnecting at least one anchoring point for connecting at least one anchoring line and at least two connection points for connecting to at least two floating members.

The anchoring device is provided with connection points, or generally connection mechanisms, which preferably correspond in location to the locations of the connection points, or mechanisms, in the floating members. The anchoring device can thus be placed in the assembly in a similar way as the floating members. This allows efficiently anchoring the assembly at a central location of the assembly, which reduces the space needed to anchor the assembly in contrast to for instance anchoring the assembly at the edges thereof. Preferably, the anchoring device does not comprise a buoyant member.

Preferably, the connection points of the anchoring device are arranged to interconnect to the floating members and the anchoring device in a tessellated manner. This provides a compact assembly. More preferably, the anchoring device and a floating member of the assembly thereto have a similar shape or footprint, such that the anchoring device fits in the assembly of floating members and can preferably be coupled using the same connection mechanism. The assembly is then an interconnection of floating members and at least one anchoring device in a regular tiling manner, i.e. a tessellation with the same shapes. As an alternative, the floating members and the anchoring device may have different shapes, wherein the interconnecting the floating members and the anchoring device can be interconnected.

For stability, it is preferred if the anchoring device is provided with at least three connection points surrounding the anchoring point. The anchoring device, and the floating members, may for instance have a triangular or other polygonal shape or footprint, whereon the connection points are provided at or near the three edges. This provides a stable connection. A stable connection of an anchoring line is then achieved when the anchoring point is located near the center of the polygonal shape.

According to preferred embodiment, the anchoring device has a rectangular, square or trapezoid footprint or shape. Preferably, the floating members have a corresponding shape. The anchoring device can then be coupled efficiently to provide a floating solar panel assembly. Preferably, the anchoring device, and more preferably also a floating member, comprises four connection points at the edges thereof. This allows coupling an anchoring device to eight other members, for instance floating members or other anchoring device(s). An efficient distribution of the forces is obtained if the anchoring point is located near or preferably at a center of the rectangular, square or trapezoid shape.

The anchoring point is arranged to connect to an anchoring line or mechanism. The anchoring point may for instance comprise a ring shaped member to couple to an anchoring line or mechanism. Additionally or alternatively, the anchoring point comprises a plurality of connection points, for instance in the form of connection holes. Preferably, the anchoring point is accessible from the underside, in the assembly, of the anchoring device. This allows efficient coupling.

Preferably, the anchoring device comprises a cross shaped frame member interconnecting the four connection points and the central anchoring point. An efficient and robust anchoring device is thus obtained. Preferably, the anchoring point is located at or near the cross-section of the two legs of the cross shape.

As mentioned above, a floating member preferably comprises a buoyant member and at least two connection points for connecting the floating member to respective connection points of at least two other floating members. Efficient interconnection is obtained if the connection points of the floating member comprise a ring shaped member or generally a connection opening. By aligning a plurality of openings of respective floating members and arranging a connection device through the aligned openings, the respective floating members can be connected efficiently. This will also be explained in greater detail below.

It is possible that the connection points of the anchoring device have a similar configuration, i.e. may be provided with ring shaped members or openings at the connection points for receiving a connection device as mentioned above. A reliable interconnection of the anchoring device is however obtained if the anchoring device comprises connection rod for connecting to a connection opening of a floating member. The rod or rod shaped member of an anchoring device is then received in a connection opening, for instance a ring shaped member as mentioned above, of a floating member. Preferably, in an assembly, a plurality of connection openings of respective floating members is aligned for receiving one connection rod of an anchoring device.

In the floating assembly, the connection rods may extend upwardly. The connection openings of the floating members can then be placed over the rod and the floating members are kept in place by gravity. This however makes assembling the assembly more difficult, as the anchoring device is then the lowermost part in the assembly, which is difficult when the anchoring device is non-floating.

Therefore, according to a preferred embodiment, in the assembly, a connection rod extends downwardly. A rod can then be inserted in already aligned connection openings of floating members. Thus, preferably, the connection rods extend from the frame member in a first direction and wherein the anchoring point is arranged to connect to an anchoring line in the same direction.

The force acting on the anchoring point then forces the anchoring device downwardly, ensuring that the connected floating members remain coupled.

A compact and robust anchoring device is obtained if four connection rods extend from a cross shaped frame member in the first direction and wherein the central anchoring point extends from the frame in the same direction.

According to a further aspect, a floating solar panel assembly is provided comprising at least one floating member, preferably a plurality thereof, and an anchoring device as mentioned above. Specifically, a floating solar panel assembly is provided comprising at least one floating member for supporting at least one solar panel, wherein the floating member comprises a buoyant member and at least two connection points for connecting the floating member to respective connection points of at least two other floating members and an anchoring device as described above connected to said at least one floating member.

A preferred assembly comprises at least two floating members having connection openings as connection points, wherein at least two of the connection openings are aligned and wherein a connection device is inserted through the aligned connection openings of the two floating member for interconnecting the two floating members. The aligned connection openings of the two floating member, preferably four floating members, can be aligned and for interconnecting said floating members, a connection device is inserted through the openings and preferably subsequently locked.

According to a preferred embodiment, a floating member comprising at least one flange extending from the buoyant member, wherein the flange is provided with a connection opening. This allows efficient interconnecting the floating member. Preferably, a floating member comprises a plurality of flanges, wherein the flanges are arranged staggered in height, for instance seen in the direction perpendicular to the lower or upper surface of the buoyant member. This allows efficient interconnection of a plurality of floating members. The flanges are preferably arranged at different heights, such that the flanges in the height direction do not overlap. Upon connection, flanges of different floating members are preferably arranged stacked, allowing an efficient coupling upon alignment of the connection openings. Most preferably, the floating member comprises four flanges, each provided with a connection opening. A connection device can then be inserted through the openings.

According to a preferred embodiment, the flanges extend from a hollow buoyant member, wherein the buoyant member comprises a closable opening. The buoyant member is preferably manufactured using a molding technique, for instance a blow molding technique. By closing the opening, an efficient buoyant member is thus obtained. It is then preferred if the buoyant member comprises a neck provided with external threading for receiving a cap.

In case an anchoring device is also to be connected at a connection point, or perhaps if less than four floating members are to be interconnected, the height of the combined flanges at the connection point may thus vary. This may lead to height differences or less efficient connections. A floating panel assembly thus further preferably comprises at least one spacer member or ring, wherein the height of the spacer ring corresponds to the height of a flange. Such a ring may thus compensate for the height of a flange. The connection device is inserted through the aligned connection openings of the two floating member and the spacer ring.

Preferably, the outer diameter of the connection device corresponds to the diameter of the connection opening, such that a tight fit is obtained with as little as play as possible. This improves the interconnection.

An efficient interlocking is obtained if the connection device comprises a cooperating bolt member and nut member. The bolt can be inserted through the aligned openings, while the nut can then be used to lock the connection device.

In order to connect an anchoring device to at least two floating member with aligned openings, it is preferred if the connection point of the anchoring device is arranged to connect at the same location. It may for instance be possible that the anchoring device is thereto provided with the same type of connection opening as the floating members for receiving the connection device.

It is however preferred if the floating members can be interconnected prior to connecting an anchoring device. Therefore, as mentioned above, the anchoring device preferably comprises a connection rod for connecting to a floating member. A connection device is then preferably provided with an opening for receiving the connection rod of an anchoring device. In the assembly, the connection device thus preferably comprises an opening receiving a connection rod of the anchoring device.

According to a preferred embodiment, the bolt member comprises an opening, preferably a through hole. Also the nut is preferably provided with a corresponding opening, preferably through hole. The connection device is then a cylindrical device arranged to receive a connection rod of the anchoring device.

According to a preferred embodiment, the bolt or the nut is provided with a supporting flange at an end thereof, wherein, in connected state with an anchoring device, the anchoring device is supported on the supporting flange. It is then preferred if the bolt is provided with the supporting flange.

It is then preferred that on the connections points for connecting an anchoring device, the supporting flange extends and faces upwardly. The anchoring device can then be supported in a stable manner. When the supporting flange is indeed arranged on the bolt, it is then preferred that for the interconnection of the anchoring device, the bolt is arranged on top, i.e. above the nut. Fastening the bolt and nut may in this orientation be more difficult. It is however provides a stable support for the anchoring device. For the ease of installation, it is then preferred if for the interconnection of floating members, the nut is arranged above the bolt. The nut can then be tightened easily.

In order to prevent accidental loosening of the connection device, the nut comprises a self locking nut. The nut may thereto be tapering and/or comprise a varying threading along the length. Additionally or alternatively, the bolt may have a self locking mechanism, for instance in the form of a tapering and/or varying threading.

To further improve the locking mechanism, also in terms of user friendliness, it is preferred if the connection device is provided with a recess or protrusion cooperating with the other of a recess or protrusion of the floating member. In connected state, the protrusion interlocks in the recess, thereby already locking the connection device and the floating member, for instance to prevent relative rotation between the parts. Preferably, the recess or protrusion on the floating member is arranged on a flange of the floating member comprising the connection opening. Preferably, the floating member comprises a recess for receiving a protrusion of the connection device.

According to preferred embodiment, at least one of the nut and the bolt is provided with a protrusion or a recess for interlocking with the other of a protrusion or a recess arranged at or near the connection opening of a floating member. Preferably, any protrusion is arranged to lock into the recess in the locked position of the bolt and the nut. Upon tightening the connection, the protrusion may snap into the recess, preventing loosening of the nut and bolt.

It should be appreciated that although the interconnection of the floating members or the configuration thereof, is disclosed in connection with the anchoring device, a floating solar panel assembly may also lack such a anchoring device. According to further aspect, a floating solar panel assembly is thus provided comprising a plurality of floating members.

According to further aspects, a connection device, a spacer ring and/or a floating member as defined above is provided.

According to a further aspect, a floating solar panel assembly is provided comprising at least one anchoring device, a floating member, a spacer ring and/or a connection device as defined above.

According to a further aspect a method for manufacturing a floating solar panel assembly, preferably as described above, is provided, wherein the method comprises the steps of providing at least floating member and at least one anchoring device and interconnecting the floating member and the anchoring device.

Preferably, the method comprises the steps of:
- providing at least two floating members;
- aligning at least two connection openings of said floating members;
- inserting a connection device, preferably as defined above, through said aligned openings for interconnecting the two floating members, wherein the connection device comprises an opening; and
- inserting a connection rod of an anchoring device, preferably as defined above, in said opening of said connection device.

The present invention is further illustrated by the following Figures, which show a preferred embodiment of the device and method according to the invention, and are not intended to limit the scope of the invention in any way, wherein:
- figure 1 schematically shows a floating solar panel assembly in perspective view;
- figures 2a, 2b show the assembly in top view and side view respectively;
- figure 3 shows an anchoring device;
- figures 4a, 4b show two versions of a floating member;
- figure 5 shows a connection device in a cutaway view;
- figures 6a and 6b show the connection device connecting floating members in perspective view and a cutaway view, respectively; and
- figure 7 shows the location of the connection device connecting floating members and an anchoring device in a cutaway view.

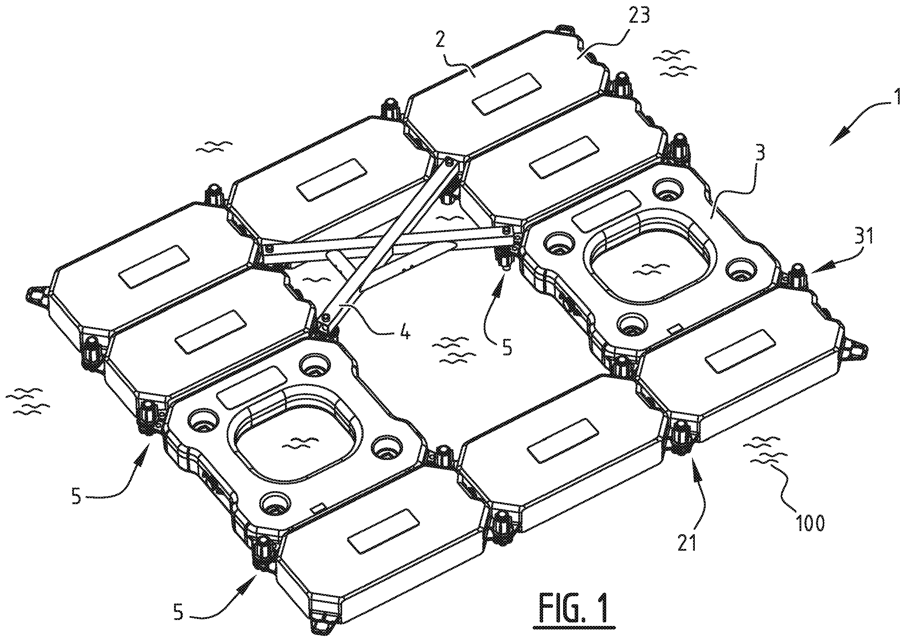

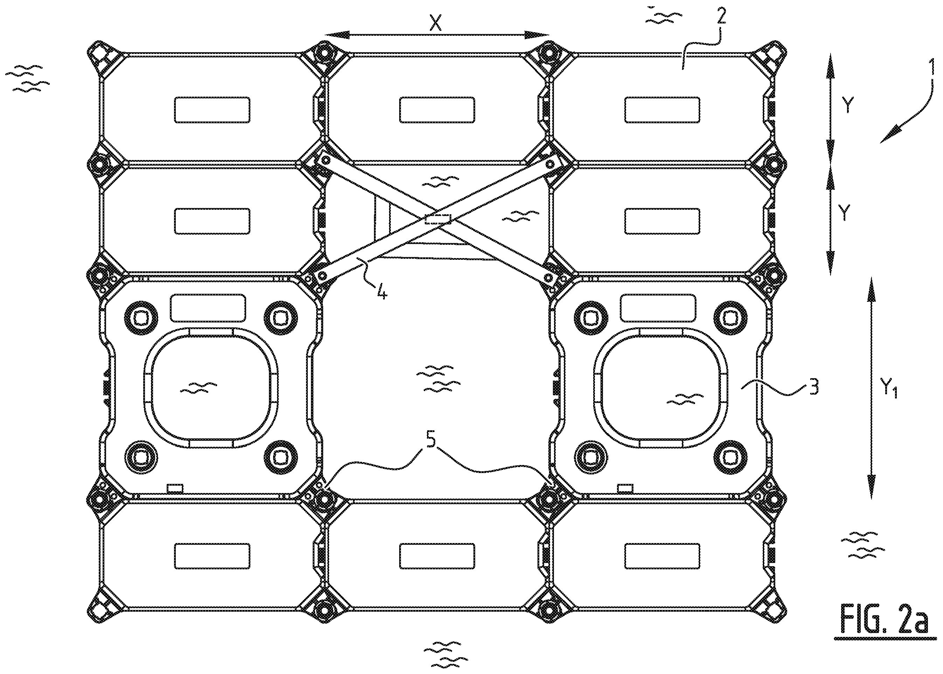

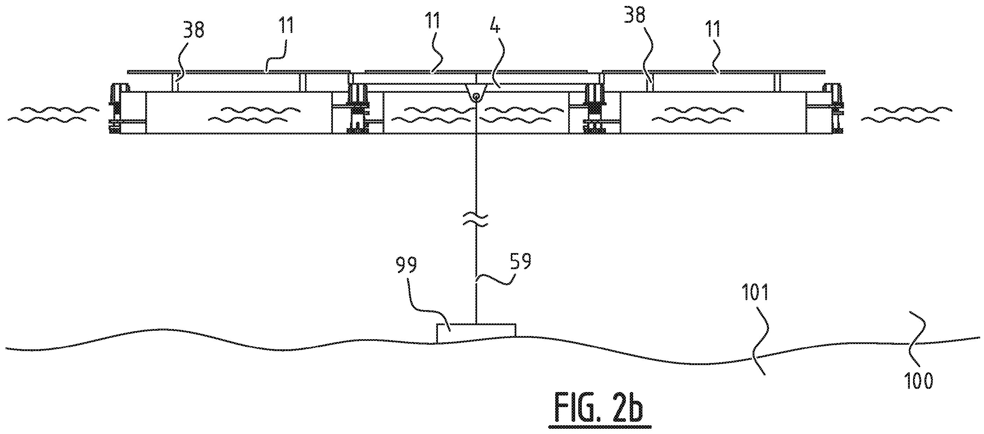

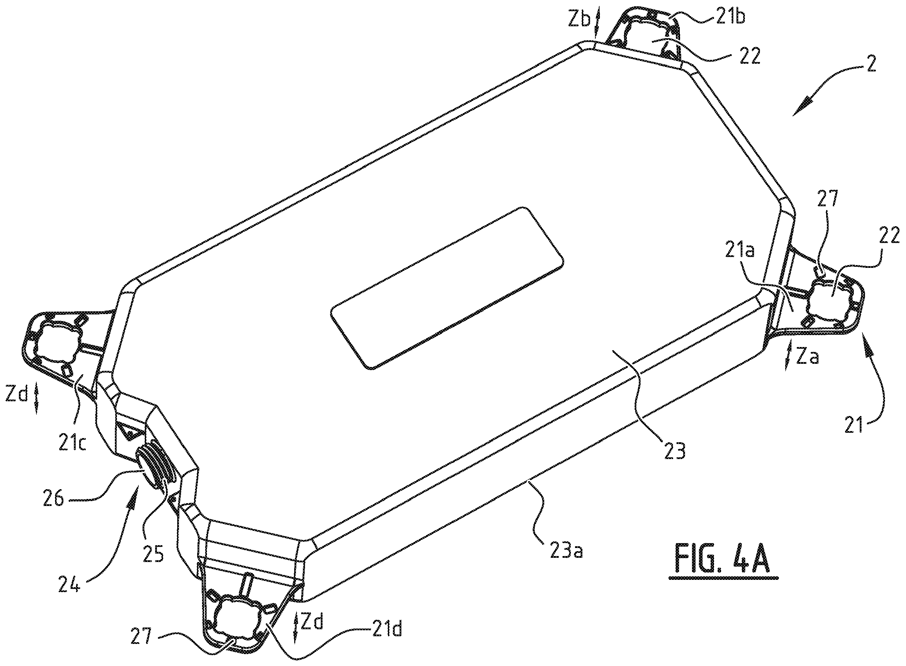

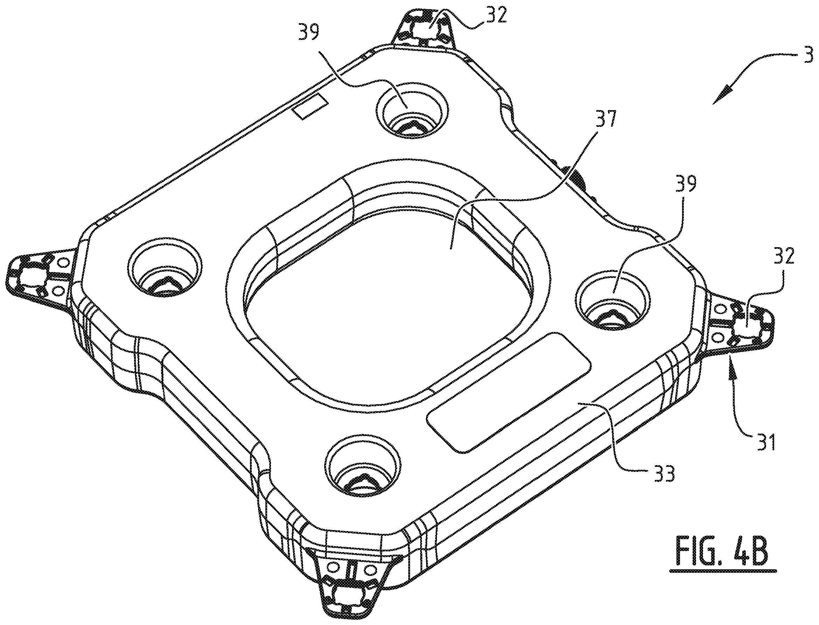

In figures 1, 2a and 2b, a floating solar panel assembly 1 floating on a water body 100 is shown which is arranged to support a plurality of solar panels 11 (see figure 2b). The floating assembly 1 comprises a plurality of interconnected floating members 2 and 3, which are interconnected in a tessellated manner at respective connection points 21, 31. In this example, two types of floating members 2, 3 are used, wherein a second type 3 (see also figure 4b) is of a different shape than the first type 2 (see figure 4a).

Floating members 2, 3 are arranged adjacently. A distance in the X-direction between the connection points 21, 31, indicated with x in figure 2a, is the same for the floating members 2, 3. The distance in the Y-direction between the connection points 21 of the first floating members 2 is the same and indicated with y in figure 2a. This distance y₁ is larger for the second floating member 3, which has a square shape (see figure 4b), instead of the rectangular shape of the first floating member 2 (see figure 4a).

A floating member 2 comprises a hollow buoyant member 23 provided with connection flanges 21a-d as connection points 21 at the edges thereof. The flanges 21a-d are provided with openings 22 for receiving a connection device as will be explained below. Each of the flanges 21a-d furthermore extend at different heights, indicated with Za-d, for instance with respect to a lower surface 23a of the floating member 2. This allows efficient coupling of respective floating members 2.

The floating member 2, in particular the buoyant member 23 thereof is manufactured from a plastic, in particular using a molding technique, in particular a blow molding technique. The floating member 2 is preferably provided with a closable opening 24, in this example in the form of a cylindrically shaped neck 24 which defines an opening 26. The neck 24 is provided with external threading for receiving a suitable cap (not shown) which can be threaded onto the neck 24. Also the second floating member 3 is provided with a threaded neck (not shown).

The second floating member 3 (see figure 4b) is provided with receptacles 39 in the form of openings for receiving a frame member 38 (see figure 2b) arranged to support the solar panels 11. A central opening 37 is furthermore provided. The configuration of the connection points 31 in the form of the staggered flanges is the same as for the first type of floating members 2.

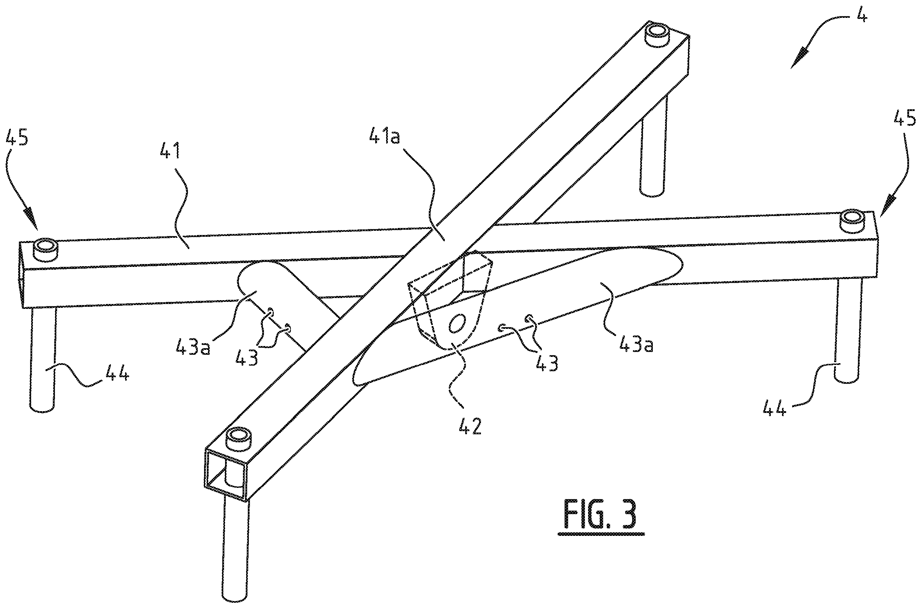

For anchoring the assembly 1 to for instance the bottom 101 of the water body 100, an anchoring device 4 is provided. The anchoring device 4 is provided at a central location of the assembly 1 as can be seen in figures 1 and 2. Anchoring the assembly 1 at a more central location, opposed to anchoring at the edges thereof, reduces the length of any anchoring lines extending from the edges of the assembly 1. To be able to connect the anchoring device 4 at a central location of the assembly 1, the anchoring device 4 is provided with connection points, generally indicated with 45 in figure 3, which are arranged to cooperate with the connection points 21, 31 of the floating members 2, 3. That is, the mutual distance of the connection points 45 in the anchoring device 4 corresponds to the mutual distances x,y of the connection points 21 of the floating members, in this example specifically of the first floating members 2. The anchoring device 4 thus fits within the assembly of floating members 2.

The connection points 45 are in this example in the form of connection rods 44 which are arranged at or near the corners of the anchoring device 4. The connection rods 44 extend downwardly in this example and are arranged to fit in the connection points 21, 31 of the floating members 2, 3, specifically in the openings 22, 32 thereof. A compact and robust configuration is obtained if the anchoring device 4 comprises a cross-shaped frame member 41, wherein the connection points 45 are arranged at or near the extremities of the arms of the cross-shaped frame 41. At a central location 41, an anchoring point 42, 43 in the form of an eye 42 is provided for connecting to an anchoring line 59 which can be connected to anchor 99 (see figure 2b). Additionally or alternatively, the anchoring device 4 is provided with an anchor connecting mechanism, for instance in the form of connecting holes 43. The holes 43 may be provided in cross-beams 43a.

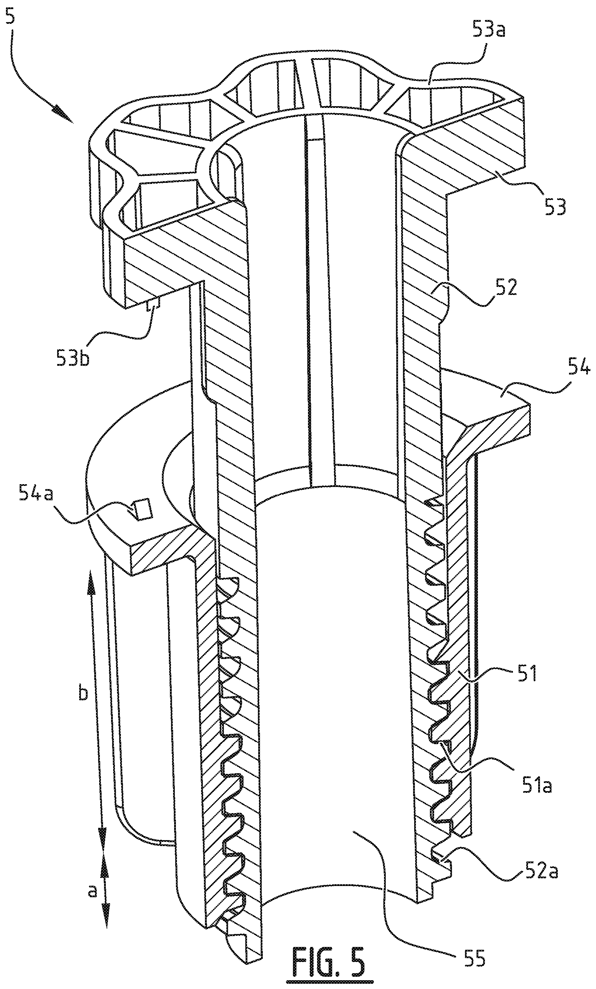

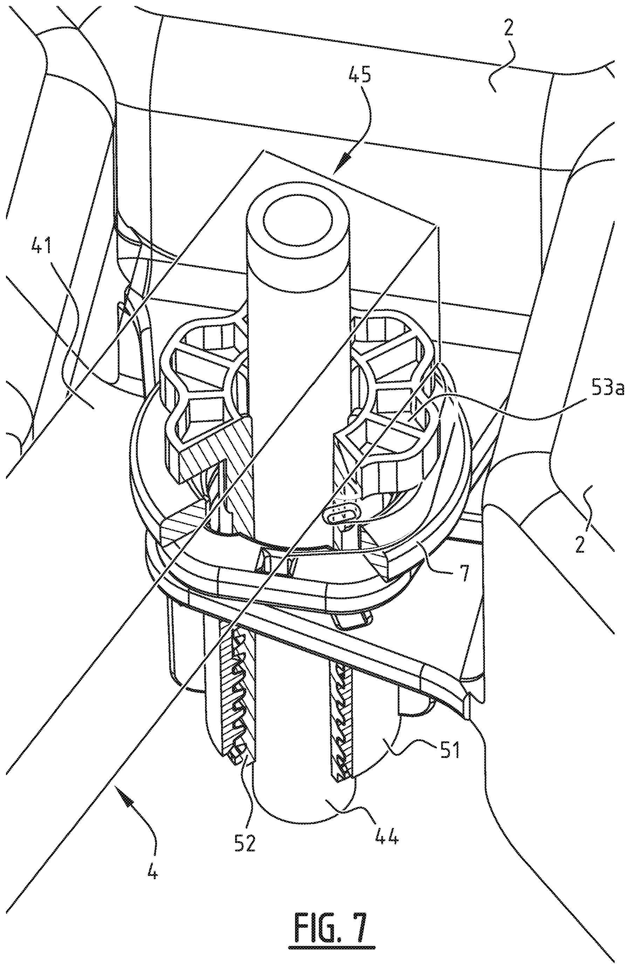

The interconnection of the components of the assembly 1 will now be explained while referring to figures 5 - 7. In figure 5, a connection device 5 is shown which is arranged to be received in the openings 22, 32 of the floating members 2, 3 for interconnection thereof. The connection device 5 comprises a nut 51 provided with threading 51a which cooperates with bolt 52 which is provided with cooperating threading 52a. The nut 51 is preferably of the self locking type and may thereto be formed conically or be provided with sections a, b with different pitch. This prevents unwanted loosening of the nut 51.

As can be seen in figure 5, the connection device 5 comprises a through hole 55. Both the nut 51 and the bolt 52, in particular near the end flange 53 thereof, are provided with an opening.

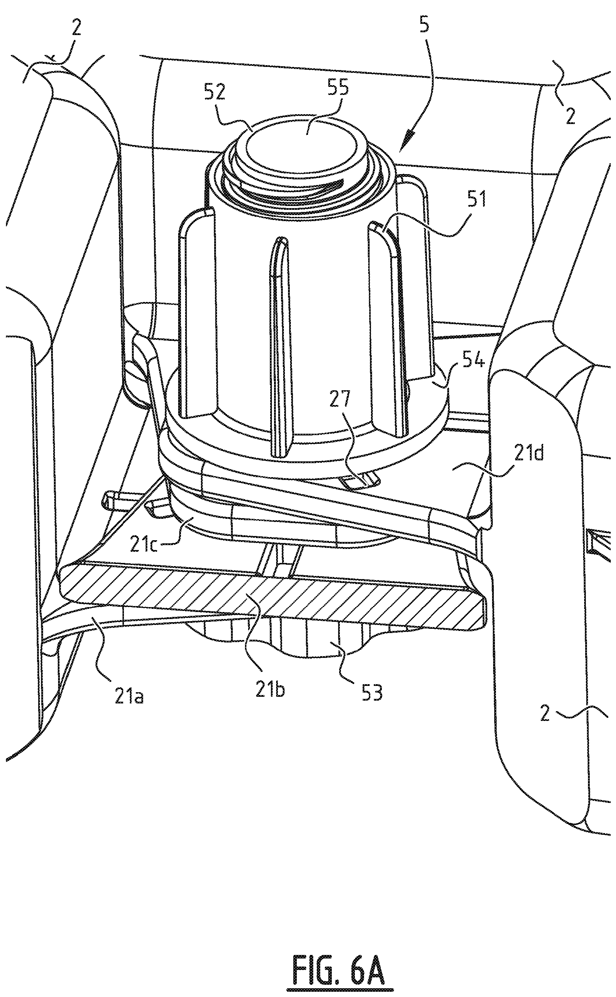

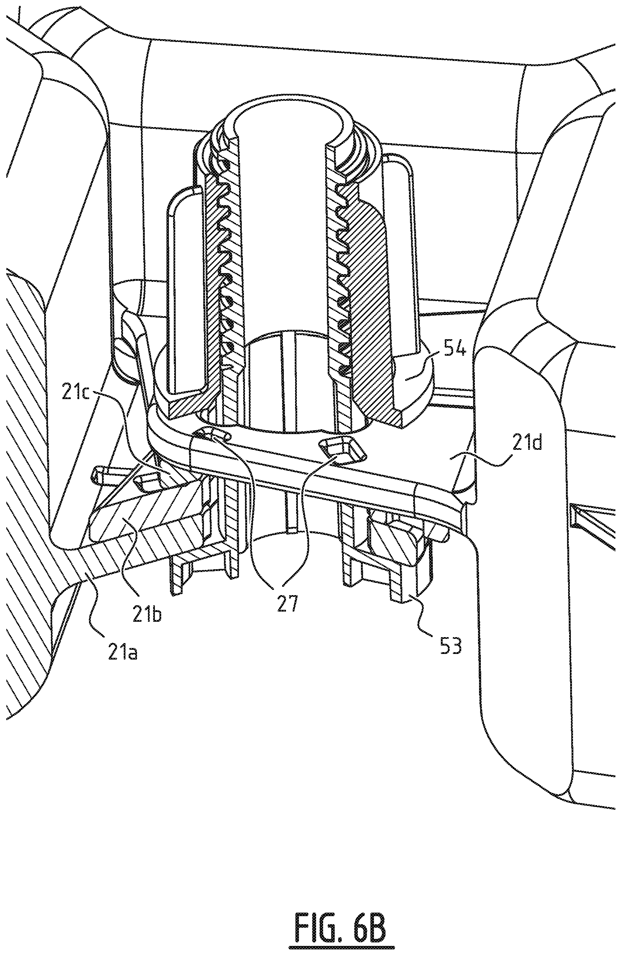

The nut 51 is provided with a flange portion 54 which may be provided with at least one protrusion 54a which is arranged to cooperate with a recesses 27 provided in the flanges 21a-d, 31a-d of the floating members 2,3. Also the bolt 52 comprises a flange portion 53 at the end, of which a lower surface (in figure 5) is provided with at least one protrusion 53b, also for cooperation with a recess provided in the flanges 21a-d. The connection device 5 is arranged to receive between the flanges 53 and 54 a plurality of flanges 21a-d, 31a-d of the floating members 2, 3, as can be seen in figure 6a and 6b.

For interconnecting the floating members 2, the openings 22 of the flanges 21a-d of the different floating members 2 are aligned, such that a common opening 22 is formed through which the connection device 5 can inserted. As can be seen in figures 6a, 6b, the heights of the flanges 21a-d are staggered, such that the floating members 2 self are vertically aligned, i.e. extend at the same height. The bolt 52 can be inserted, in this example from the bottom-up, through the aligned openings 22 and the nut 51 is fastened. As the nut 51 is self-locking, accidental loosening is prevented. Protrusion 53b received in a recess of the lower flange 21a may assist in keeping the bolt 52 in place while rotating the nut 51 upon fastening. The protrusion 54a of the nut 51 may snap into a recess 27 when the nut 51 is tightened. This also prevents loosening.

The interconnection of an anchoring device 4 occurs in a similar manner. However, to reduce the height of the anchoring device 3 with respect to the floating members 2 and to provide a stable support surface for the anchoring device 4, the connection device 5 is in this example used the other way around. That is, bolt 52 is inserted from the topside through the aligned openings 22 of in this example three floating members 2 (the place of the fourth floating member of figures 6a, 6b is taken by the anchoring device 4) and the nut 51 is provided on the lower part. To compensate for a lack of one (or more in other examples) of the flanges 21a-d, a spacer or supporting ring 7 is provided. The ring 7 has a height similar to the height of a flange 21a-d. In connected state, the connection rod 44 at the connection point 45 of the anchoring device 4 is inserted through the through hole 55 of the connection device 5. In this example, the rod 44 protrudes from the lower side and may be locked there. The anchoring device 4, in particular the frame 41 thereof, now rests stably on the surface 53a of the bolt 53 of the connection device 5.

As an alternative, the connection rod 44 may inserted into the connection device 5 and the holes 22 in the situation as shown in figure 6a. The anchoring device 4 may then rest on the topside of the bolt 52 or another supporting surface for stability.

The present invention is not limited to the embodiment shown, but extends also to other embodiments falling within the scope of the appended claims.

## Claims

1. Kit of parts comprising at least one anchoring device (4) and a plurality of floating members (2) for assembling a floating solar panel assembly comprising the anchoring device (4) for anchoring the floating
solar panel assembly, wherein the assembly comprises the plurality of interconnected floating members (2) for supporting at least one solar panel, wherein a floating member (2) comprises a buoyant member (23) and at least two connection points (21) for connecting the floating member (2) to respective connection points (21) of at least two other floating members (2), wherein the anchoring device (4) comprises a frame member (41) interconnecting at least one anchoring point (42, 43) for connecting at least one anchoring line (59) and at least two connection points (21) for connecting to at least two floating members (2), **characterised in that** the connection points (21) of the anchoring device (4) are arranged to interconnect the floating members (2) and the anchoring device (4) in a tessellated manner.

2. Kit of parts according to claim 1, wherein the connection points of the floating members (2) define a rectangular, square or trapezoid footprint or shape, and wherein the connection points of the anchoring device (4) define a footprint corresponding to the rectangular, square or trapezoid footprint of the connection points of the floating members (2).

3. Kit of parts according to claim 1 or 2, wherein the connection points (21) of the anchoring device (4) are arranged to interconnect to the floating members (2) and the anchoring device (4) in a regular tiling manner.

4. Kit of parts according to claim 1, 2 or 3, wherein the anchoring device (4) has a rectangular, square or trapezoid footprint comprising four connection points at the edges thereof, wherein the anchoring point (42, 43) is located near a center of the rectangular, square or trapezoid shape.

5. Kit of parts according to claim 4, wherein the anchoring device (4) comprises a cross shaped frame member (41) interconnecting the four connection points and the central anchoring point (42, 43).

6. Kit of parts according to claim 1 - 5, wherein a connection point (44) of the anchoring device (4) comprises a connection rod (44) for connecting to a connection opening 22 of a floating member, wherein the connection rods (44) preferably extend from the frame member (41) in a first direction and wherein the anchoring point (42, 43) is arranged to connect to an anchoring line (59) in the same direction.

7. Kit of parts according to claim 5 and 6, wherein four connection rods (44) extend from the frame member (41) in the first direction and wherein the central anchoring point (42) extends or is accessible from the frame in the same direction.

8. Kit of parts according to any of the preceding claims 1 - 7, comprising at least two floating members (2) having connection openings (22) as connection points, wherein at least two of the connection openings (22) are aligned and wherein a connection device (5) is inserted through the aligned connection openings (22) of the two floating member (2) for interconnecting the two floating members (2).

9. Kit of parts according to claim 8, wherein a floating member (2) comprises a plurality of flanges (21), wherein a flange (21) is provided with a connection hole (22), wherein the flanges (21) are arranged staggered in height, such that the flanges (21) of one floating member (2) in the height direction do not overlap and wherein flanges (21) of different floating members (2) are arranged stacked, wherein the flanges (21) extend from a hollow buoyant member (23), wherein the buoyant member (23) comprises a closable opening (26) in the form of a neck (25) provided with external threading for receiving a cap.

10. Kit of parts according to claim 8 or 9, further comprising at least one spacer ring (7), wherein the height of the spacer ring (7) corresponds to the height of a flange (21), wherein the connection device (5) is inserted through the aligned connection openings (22) of the two floating members (2) and the spacer ring (7).

11. Kit of parts according to any of the claim 8 - 10, wherein the connection device (5) comprises a cooperating bolt member (52) and nut member (51), wherein the connection device (5) comprises an opening (55) receiving a connection rod (44) of the anchoring device (4), wherein the bolt member (52) comprises a through hole (55).

12. Kit of parts according to claim 11, wherein the bolt (52) is provided with a supporting flange at an end thereof, wherein the anchoring device (4) is supported on the supporting flange (21).

13. Floating solar panel assembly comprising the kit of parts according to any of the preceding claims, whereby the floating members (2) and the anchoring device (4) are interconnected in a tesselated manner.

14. Method for manufacturing a floating solar panel assembly according to claim 13, comprising the steps of providing a plurality of floating members (2) and at least one anchoring device (4) and interconnecting the floating member (2) and the anchoring device (4).

15. Method according to claim 14, comprising the steps of:
- providing at least two floating members (2);
- aligning at least two connection openings of said floating members (2);
- inserting a connection device (5) as defined in claim 8 through said aligned openings for interconnecting the two floating members (2), wherein the connection device (5) comprises an opening (55); and
- inserting a connection rod (44) of an anchoring device (4) in said opening of said connection device (5).

## Patentansprüche

1. Teilesatz, umfassend mindestens eine Verankerungsvorrichtung (4) und eine Vielzahl von Schwimmelementen (2) zum Zusammenbauen einer schwimmenden Solarpanelanordnung, umfassend die Verankerungsvorrichtung (4) zum Verankern der schwimmenden Solarpanelanordnung, wobei die Anordnung die Vielzahl von miteinander verbundenen Schwimmelementen (2) zum Tragen von mindestens einem Solarpanel umfasst, wobei ein Schwimmelement (2) ein Auftriebselement (23) und mindestens zwei Verbindungspunkte (21) zum Verbinden des Schwimmelements (2) mit jeweiligen Verbindungspunkten (21) von mindestens zwei anderen Schwimmelementen (2) umfasst, wobei die Verankerungsvorrichtung (4) ein Rahmenelement (41) umfasst, das mindestens einen Verankerungspunkt (42, 43) zum Verbinden mindestens einer Verankerungsleine (59) und mindestens zwei Verbindungspunkte (21) zum Verbinden mit mindestens zwei Schwimmelementen (2) miteinander verbindet, **dadurch gekennzeichnet, dass** die Verbindungspunkte (21) der Verankerungsvorrichtung (4) eingerichtet sind, um die Schwimmelemente (2) und die Verankerungsvorrichtung (4) mosaikartig miteinander zu verbinden.

2. Teilesatz nach Anspruch 1, wobei die Verbindungspunkte der Schwimmelemente (2) eine rechteckige, quadratische oder trapezförmige Grundfläche oder Form definieren, und wobei die Verbindungspunkte der Verankerungsvorrichtung (4) eine Grundfläche definieren, die der rechteckigen, quadratischen oder trapezförmigen Grundfläche der Verbindungspunkte der Schwimmelemente (2) entspricht.

3. Teilesatz nach Anspruch 1 oder 2, wobei die Verbindungspunkte (21) der Verankerungsvorrichtung (4) so eingerichtet sind, dass sie die Schwimmelemente (2) und die Verankerungsvorrichtung (4) in einer regelmäßigen kachelartigen Weise miteinander verbinden.

4. Teilesatz nach Anspruch 1, 2 oder 3, wobei die Verankerungsvorrichtung (4) eine rechteckige, quadratische oder trapezförmige Grundfläche aufweist, umfassend vier Verbindungspunkte an deren Rändern, wobei sich der Verankerungspunkt (42, 43) nahe einer Mitte der rechteckigen, quadratischen oder trapezförmigen Form befindet.

5. Teilesatz nach Anspruch 4, wobei die Verankerungsvorrichtung (4) ein kreuzförmiges Rahmenelement (41) umfasst, das die vier Verbindungspunkte und den zentralen Verankerungspunkt (42, 43) miteinander verbindet.

6. Teilesatz nach Anspruch 1 bis 5, wobei ein Verbindungspunkt (44) der Verankerungsvorrichtung (4) eine Verbindungsstange (44) zum Verbinden mit einer Verbindungsöffnung 22 eines Schwimmelements umfasst, wobei sich die Verbindungsstangen (44) vorzugsweise von dem Rahmenelement (41) in eine erste Richtung erstrecken und wobei der Verankerungspunkt (42, 43) zum Verbinden mit einer Verankerungsleine (59) in derselben Richtung eingerichtet ist.

7. Teilesatz nach Anspruch 5 und 6, wobei sich vier Verbindungsstangen (44) von dem Rahmenelement (41) in die erste Richtung erstrecken und wobei sich der zentrale Verankerungspunkt (42) von dem Rahmen in die gleiche Richtung erstreckt oder zugänglich ist.

8. Teilesatz nach einem der vorstehenden Ansprüche 1 bis 7, umfassend mindestens zwei Schwimmelemente (2), die Verbindungsöffnungen (22) als Verbindungspunkte aufweisen, wobei mindestens zwei der Verbindungsöffnungen (22) ausgerichtet sind und wobei eine Verbindungsvorrichtung (5) durch die ausgerichteten Verbindungsöffnungen (22) der beiden Schwimmkörper (2) eingesetzt ist, um die beiden Schwimmkörper (2) miteinander zu verbinden.

9. Teilesatz nach Anspruch 8, wobei ein Schwimmelement (2) eine Vielzahl von Flanschen (21) umfasst, wobei ein Flansch (21) mit einem Verbindungsloch (22) bereitgestellt wird, wobei die Flansche (21) in der Höhe versetzt eingerichtet sind, sodass die Flansche (21) eines Schwimmelements (2) in der Höhenrichtung nicht überlappen, und wobei Flansche (21) verschiedener Schwimmelemente (2) gestapelt eingerichtet sind, wobei sich die Flansche (21) von einem hohlen Auftriebselement (23) erstrecken, wobei das Auftriebselement (23) eine verschließbare Öffnung (26) in Form eines Halses (25) umfasst, der mit einem Außengewinde zum Aufnehmen einer Kappe bereitgestellt wird.

10. Teilesatz nach Anspruch 8 oder 9, ferner umfassend mindestens einen Abstandsring (7), wobei die Höhe des Abstandsrings (7) der Höhe eines Flansches (21) entspricht, wobei die Verbindungsvorrichtung (5) durch die ausgerichteten Verbindungsöffnungen (22) der beiden Schwimmelemente (2) und den Abstandsring (7) eingesetzt wird.

11. Teilesatz nach einem der Ansprüche 8 bis 10, wobei die Verbindungsvorrichtung (5) ein zusammenwirkendes Bolzenelement (52) und Mutterelement (51) umfasst, wobei die Verbindungsvorrichtung (5) eine Öffnung (55) umfasst, die eine Verbindungsstange (44) der Verankerungsvorrichtung (4) aufnimmt, wobei das Bolzenelement (52) ein Durchgangsloch (55) umfasst.

12. Teilesatz nach Anspruch 11, wobei der Bolzen (52) mit einem Trageflansch an einem Ende davon bereitgestellt wird, wobei die Verankerungsvorrichtung (4) auf dem Trageflansch (21) geträgert ist.

13. Schwimmende Solarpanelanordnung, umfassend den Teilesatz nach einem der vorstehenden Ansprüche, wobei die Schwimmelemente (2) und die Verankerungsvorrichtung (4) mosaikartig miteinander verbunden sind.

14. Verfahren zum Herstellen einer schwimmenden Solarpanelanordnung nach Anspruch 13, umfassend die Schritte des Bereitstellens einer Vielzahl von Schwimmelementen (2) und mindestens einer Verankerungsvorrichtung (4) und des Verbindens des Schwimmelements (2) und der Verankerungsvorrichtung (4).

15. Verfahren nach Anspruch 14, umfassend die Schritte:
- Bereitstellen von mindestens zwei Schwimmelementen (2);
- Ausrichten von mindestens zwei Verbindungsöffnungen der Schwimmelemente (2);
- Einsetzen einer Verbindungsvorrichtung (5), wie in Anspruch 8 definiert, durch die ausgerichteten Öffnungen zum Verbinden der beiden Schwimmelemente (2) miteinander, wobei die Verbindungsvorrichtung (5) eine Öffnung (55) umfasst; und
- Einsetzen einer Verbindungsstange (44) einer Verankerungsvorrichtung (4) in die Öffnung der Verbindungsvorrichtung (5).

## Revendications

1. Kit de pièces comprenant au moins un dispositif d'ancrage (4) et une pluralité d'éléments flottants (2) destinés à assembler un ensemble panneau solaire flottant comprenant le dispositif d'ancrage (4) destiné à ancrer l'ensemble panneau solaire flottant, dans lequel l'ensemble comprend la pluralité d'éléments flottants (2) reliés destinés à soutenir au moins un panneau solaire, dans lequel un élément flottant (2) comprend un élément de flotteur (23) et au moins deux points de liaison (21) destinés à relier l'élément flottant (2) à des points de liaison (21) respectifs d'au moins deux autres éléments flottants (2), dans lequel le dispositif d'ancrage (4) comprend un élément de cadre (41) reliant au moins un point d'ancrage (42, 43) destiné à relier au moins une ligne d'ancrage (59) et au moins deux points de liaison (21) destinés à être reliés à au moins deux éléments flottants (2), **caractérisé en ce que** les points de liaison (21) du dispositif d'ancrage (4) sont disposés pour relier les éléments flottants (2) et le dispositif d'ancrage (4) d'une manière en mosaïque.

2. Kit de pièces selon la revendication 1, dans lequel les points de liaison des éléments flottants (2) définissent une empreinte ou une forme rectangulaire, carrée ou trapézoïdale, et dans lequel les points de liaison du dispositif d'ancrage (4) définissent une empreinte correspondant à l'empreinte rectangulaire, carrée ou trapézoïdale des points de liaison des éléments flottants (2).

3. Kit de pièces selon la revendication 1 ou 2, dans lequel les points de liaison (21) du dispositif d'ancrage (4) sont disposés pour être reliés aux éléments flottants (2) et au dispositif d'ancrage (4) d'une manière en pavage régulier.

4. Kit de pièces selon la revendication 1, 2 ou 3, dans lequel le dispositif d'ancrage (4) a une empreinte rectangulaire, carrée ou trapézoïdale comprenant quatre points de liaison au niveau des bords de celle-ci, dans lequel le point d'ancrage (42, 43) est situé près d'un centre de la forme rectangulaire, carrée ou trapézoïdale.

5. Kit de pièces selon la revendication 4, dans lequel le dispositif d'ancrage (4) comprend un élément de cadre (41) en forme de croix reliant les quatre points de liaison et le point d'ancrage (42, 43) central.

6. Kit de pièces selon la revendication 1 à 5, dans lequel un point de liaison (44) du dispositif d'ancrage (4) comprend une tige de liaison (44) destinée à être reliée à une ouverture de liaison 22 d'un élément flottant, dans lequel les tiges de liaison (44) s'étendent de préférence à partir de l'élément de cadre (41) dans une première direction et dans lequel le point d'ancrage (42, 43) est disposé pour être relié à une ligne d'ancrage (59) dans la même direction.

7. Kit de pièces selon les revendications 5 et 6, dans lequel quatre tiges de liaison (44) s'étendent à partir de l'élément de cadre (41) dans la première direction et dans lequel le point d'ancrage (42) central s'étend ou est accessible à partir du cadre dans la même direction.

8. Kit de pièces selon l'une quelconque des revendications précédentes 1 à 7, comprenant au moins deux éléments flottants (2) ayant des ouvertures de liaison (22) comme points de liaison, dans lequel au moins deux des ouvertures de liaison (22) sont alignées et dans lequel un dispositif de liaison (5) est inséré à travers les ouvertures de liaison (22) alignées des deux éléments flottants (2) pour être relié aux deux éléments flottants (2).

9. Kit de pièces selon la revendication 8, dans lequel un élément flottant (2) comprend une pluralité de rebords (21), dans lequel un rebord (21) est pourvu d'un trou de liaison (22), dans lequel les rebords (21) sont disposés de manière décalée en hauteur, de sorte que les rebords (21) d'un élément flottant (2) dans la direction de la hauteur ne se chevauchent pas et dans lequel des rebords (21) de différents éléments flottants (2) sont disposés de manière empilée, dans lequel les rebords (21) s'étendent à partir d'un élément de flotteur (23) creux, dans lequel l'élément de flotteur (23) comprend une ouverture (26) pouvant être fermée sous forme d'un col (25) pourvu d'un filetage externe destiné à recevoir un capuchon.

10. Kit de pièces selon la revendication 8 ou 9, comprenant en outre au moins une bague d'espacement (7), dans lequel la hauteur de la bague d'espacement (7) correspond à la hauteur d'un rebord (21), dans lequel le dispositif de liaison (5) est inséré à travers les ouvertures de liaison (22) alignées des deux éléments flottants (2) et la bague d'espacement (7).

11. Kit de pièces selon l'une quelconque des revendications 8 à 10, dans lequel le dispositif de liaison (5) comprend un élément de boulon (52) et un élément d'écrou (51) qui coopèrent, dans lequel le dispositif de liaison (5) comprend une ouverture (55) recevant une tige de liaison (44) du dispositif d'ancrage (4), dans lequel l'élément de boulon (52) comprend un trou traversant (55).

12. Kit de pièces selon la revendication 11, dans lequel le boulon (52) est pourvu d'un rebord de support au niveau d'une extrémité de celui-ci, dans lequel le dispositif d'ancrage (4) est soutenu sur le rebord de support (21).

13. Ensemble panneau solaire flottant comprenant le kit de pièces selon l'une quelconque des revendications précédentes, selon lequel les éléments flottants (2) et le dispositif d'ancrage (4) sont reliés d'une manière en mosaïque.

14. Procédé de fabrication d'un ensemble panneau solaire flottant selon la revendication 13, comprenant les étapes consistant à fournir une pluralité d'éléments flottants (2) et au moins un dispositif d'ancrage (4) et à relier l'élément flottant (2) et le dispositif d'ancrage (4).

15. Procédé selon la revendication 14, comprenant les étapes consistant à :
- fournir au moins deux éléments flottants (2) ;
- aligner au moins deux ouvertures de liaison desdits éléments flottants (2) ;
- insérer un dispositif de liaison (5) selon la revendication 8 à travers lesdites ouvertures alignées pour relier les deux éléments flottants (2), dans lequel le dispositif de liaison (5) comprend une ouverture (55) ; et
- insérer une tige de liaison (44) d'un dispositif d'ancrage (4) dans ladite ouverture dudit dispositif de liaison (5).
